# EUROPÄISCHE PATENTSCHRIFT

(11) **EP 2 616 280 B1**
(45) Veröffentlichungstag und Bekanntmachung des Hinweises auf die Patenterteilung: **05.12.2018**
(21) Anmeldenummer: 11757624.9
(22) Anmeldetag: 16.09.2011
(51) Int. Cl.: B60R 11/02, F16M 11/10, F16M 11/38, G02B 27/01

(54) **ANORDNUNG ZUR BEWEGUNG VON PROJEKTIONSSCHIRMEN FÜR HEAD-UP-DISPLAYS**
ASSEMBLY FOR MOVING PROJECTION SCREENS FOR HEAD-UP DISPLAYS
SYSTÈME POUR DÉPLACER DES ÉCRANS DE PROJECTION POUR DES AFFICHAGES TÊTE HAUTE

(30) Priorität: 17.09.2010 DE 102010045854
(43) Veröffentlichungstag der Anmeldung: 24.07.2013
(73) Patentinhaber: Johnson Controls GmbH, 51399 Burscheid (DE)
(72) Erfinder: LEIST, Martin, 36251 Bad Hersfeld (DE); RUMPF, Horst, 35745 Herborn (DE)
(74) Vertreter: Finger, Catrin
(86) Internationale Anmeldenummer: PCT/EP2011/066102
(87) Internationale Veröffentlichungsnummer: WO 2012/035140

(56) Entgegenhaltungen:
- EP-A1- 1 921 340
- WO-A1-98/20380
- DE-A1-102009 040 702
- DE-U1- 8 907 397
- US-A1- 2009 166 501

## Beschreibung

Die Erfindung betrifft eine Anordnung zur Bewegung von Projektionsschirmen für Head-up-Displays. Derartige Projektionsschirme werden auch als Combiner bezeichnet.

Sie werden auf der Windschutzscheibe eines Fahrzeugs im Sichtfeld des Fahrers angebracht. Auf den Projektionsschirm werden Fahrzeuginformationen von einem TFT-Display projiziert. Es ist wünschenswert, dass diese Projektionsschirme bei Nichtbenutzung aus dem Sichtfeld des Fahrzeugführers genommen werden, was im Allgemeinen durch Wegklappen des Projektionsschirms erfolgt. Darüber hinaus sind die Projektionsschirme hohen mechanischen und thermischen Beanspruchungen ausgesetzt, welche durch hohe Temperaturen, Sonnenlicht und Kratzspuren verursacht werden. Deshalb müssen diese Bauteile im Laufe der Lebensdauer eines Fahrzeugs in der Regel mehrfach ausgewechselt werden. Sowohl beim Einbau als auch während der Benutzung kann eine Justierung der Lage des Projektionsschirms erforderlich sein. Für beide Bewegungen müssen Drehgelenke vorgesehen werden, um deren Achse der Projektionsschirm geschwenkt werden kann.

Bei den aus dem Stand der Technik bekannten Ausführungen werden gelenkige Anordnungen verwendet, deren Drehachse am unteren Rand oder unterhalb des Projektionsschirms liegt. Die beste optische Qualität würde jedoch erreicht werden, wenn die Drehachse im Zentrum oder nahe am Zentrum des Projektionsschirms liegen würde.

Aus der US 2009/0166501 A1 und der WO 98/20380 A1 sind jeweils gelenkige Anordnungen zur Halterung eines Projektionsschirmes bekannt.

Aus der DE 89 07 397 U1 ist eine Lagervorrichtung bekannt, welche einen Parallellogrammlenker umfasst, der mittels einer Stützstrebe schwenkbar gelagert ist.

Aufgabe der vorliegenden Erfindung ist es, eine Anordnung der eingangs genannten Art zu schaffen, die es ermöglicht, den Projektionsschirm um eine Achse zu schwenken, welche sich in der Nähe des Zentrums des Projektionsschirms befindet und möglichst wartungs- und reibungsfrei ist.

Die Aufgabe wird erfindungsgemäß mit einer Anordnung gelöst, bei der die Halterung mit einem mechanischen Koppelgetriebe verbunden ist, welches ein Basisglied aufweist, das an einem Fahrzeugteil befestigt werden kann, wobei die Gelenke des mechanischen Koppelgetriebes als stoffschlüssige Gelenke ausgebildet sind.

Die Ausführung sieht vor, dass das mechanische Getriebe als Viergelenkgetriebe ausgebildet ist, bei dem eine Koppel über ein erstes und ein zweites Verbindungsglied mit dem Basisglied gelenkig verbunden ist. Die Halterung ist an der Koppel des Viergelenkgetriebes befestigt.

Mit Koppelgetrieben auf der Grundlage von Viergelenkgetrieben können mit einfachen Mitteln vielfältige Bewegungsformen realisiert werden.

Die Gelenke des Getriebes sind stoffschlüssige Gelenke, vorzugsweise in Form von Federgelenken. Stoffschlüssige Gelenke zeichnen sich durch Reibungs- und Wartungsfreiheit aus und gewährleisten eine hohe Lebensdauer.

Die Ausgestaltung sieht vor, zwei parallel angeordnete Getriebe zu verwenden. Zweckmäßigerweise werden dazu zwei Viergelenkanordnungen gekoppelt, wobei die Halterung an einem Verbindungselement befestigt ist, mit dem die beiden Viergelenkanordnungen verbunden sind.

Um einen identischen Bewegungsablauf der beiden Getriebe zu erreichen, ist es zweckmäßig, zwei gleiche Viergelenkanordnungen zu verwenden, welche über ein Verbindungselement gekoppelt sind.

Das Verbindungselement besteht in einer bevorzugten Ausführung aus Verbindungsstäben, welche jeweils die Glieder oder die Gelenke der beiden Viergelenkanordnungen verbinden.

Anhand der beigefügten schematischen Figuren wird die Erfindung näher erläutert.

In den zugehörigen Zeichnungen zeigen:
- Figur 1: eine schematische Darstellung der Viergelenkanordnung und
- Figur 2: eine perspektivische Darstellung einer Ausführungsmöglichkeit mit zwei Viergelenkanordnungen.

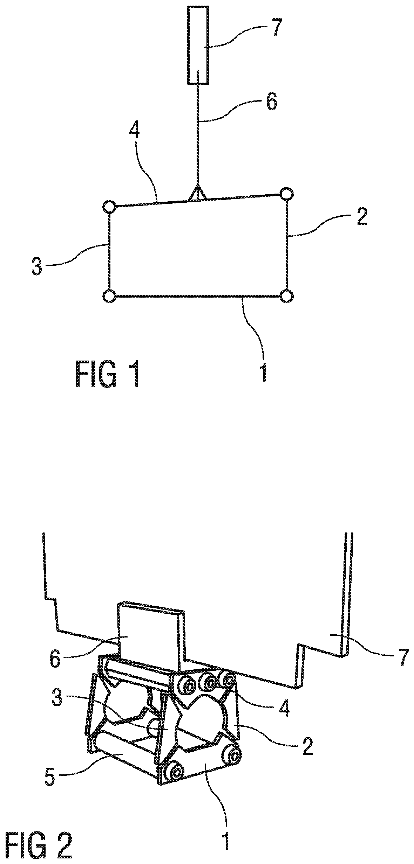

**Figur 1** zeigt schematisch eine Viergelenkgetriebeanordnung mit einem gestellfesten Basisglied 1. Die Enden des Basisglieds 1 sind mittels Drehgelenken mit einem ersten Verbindungsglied 2 und einem zweiten Verbindungsglied 3 verbunden. Die Verbindungsglieder 2 und 3 sind wiederum mit der Koppel 4 gelenkig verbunden. An der Koppel 4 ist die Halterung 6 befestigt, an der der Projektionsschirm 7 angebracht ist.

Bei der in **Figur 2** dargestellten Ausführungsform werden zwei gleiche Viergelenkanordnungen verwendet, die mit einem Verbindungselement miteinander gekoppelt sind. An dem Verbindungselement befindet sich eine Befestigungsmöglichkeit für die Halterung 6. Das Verbindungselement besteht aus vier Verbindungsstäben 5, welche jeweils analoge Glieder oder analoge Gelenke der beiden Viergelenkanordnungen verbinden.

In Abhängigkeit von den Abmessungen und gegenseitigen Längenverhältnissen der Glieder 1 bis 4 können für die Halterung 6, die mit der Koppel 4 verbunden ist, und damit auch für den Projektionsschirm 7 bestimmte Bewegungskurven realisiert werden, insbesondere auch solche, die die gewünschte Kippbewegung des Projektionsschirms ausführen.

### Bezugszeichenliste

- 1: Basisglied
- 2: Erstes Verbindungsglied
- 3: Zweites Verbindungsglied
- 4: Koppel
- 5: Verbindungsstab
- 6: Halterung
- 7: Projektionsschirm

## Patentansprüche

1. Anordnung mit einem Projektionsschirm (7) zur Bewegung des Projektionsschirms (7) für ein Head-up-Displays,
- mit einer Halterung (6) zur Befestigung des Projektionsschirmes (7), wobei
- die Halterung (6) mit einem mechanischen Koppelgetriebe verbunden ist, welches ein Basisglied (1) aufweist, das an einem Fahrzeugteil befestigt werden kann,
- die Gelenke des mechanischen Koppelgetriebes als stoffschlüssige Gelenke ausgebildet sind,
- das mechanische Getriebe als Viergelenkgetriebe ausgebildet ist, bei dem eine Koppel (4) über ein erstes Verbindungsglied (2) und ein zweites Verbindungsglied (3) mit dem Basisglied (1) mittels Gelenken verbunden ist und die Halterung (6) an der Koppel (4) des Viergelenkgetriebes befestigt ist,
- zwei Viergelenkgetriebe parallel und zueinander beabstandet angeordnet und gleich ausgeführt sind, und
- die zwei Viergelenkgetriebe über ein Verbindungselement gekoppelt sind und die Halterung (6) an dem Verbindungselement befestigt ist.

2. Anordnung nach Anspruch 1, **dadurch gekennzeichnet, dass** die beiden Viergelenkanordnungen mit Verbindungsstäben (5) gekoppelt sind.

3. Anordnung nach Anspruch 1 oder 2, **dadurch gekennzeichnet, dass** an der Verbindung ein Bauteil angeordnet ist, an dem eine Befestigungsmöglichkeit für die Halterung (6) angeordnet ist.

## Claims

1. An assembly with a projection screen (7) for moving the projection screen (7) for a head-up display,
- with a mount (6) for fastening the projection screen (7), whereby
- the mount (6) is connected to a mechanical coupler mechanism having a basic member (1) which can be fastened to a vehicle part,
- the joints of the mechanism are designed as materially integral joints,
- the mechanical mechanism is designed as a four-bar mechanism, in which a coupler (4) is connected to the basic member (1) by means of joints via a first connecting member (2) and a second connecting member (3), and the mount (6) is fastened to the coupler (4) of the four-bar mechanism,
- two four-bar mechanisms are arranged parallel and spaced from each other and are of identical design, and
- the two four-bar assemblies are coupled via a connecting element and the mount (6) is fastened to the connecting element.

2. The assembly as claimed in claim 1, **characterized in that** the two four-bar assemblies are coupled to connecting rods (5).

3. The assembly as claimed in claim 1 or 2, **characterized in that** a component, on which a facility for fastening the mount (6) is arranged, is arranged on the connection.

## Revendications

1. Ensemble avec un écran de projection (7) servant à déplacer l'écran de projection (7) pour un affichage tête haute,
- avec une fixation (6) servant à fixer l'écran de projection (7),
dans lequel
- la fixation (6) est reliée à un mécanisme à bielle mécanique, lequel présente un organe de base (1), qui peut être fixé au niveau d'une partie de véhicule,
- les articulations du mécanisme à bielle mécanique sont réalisées sous la forme d'articulations à liaison de matière,
- le mécanisme mécanique est réalisé sous la forme d'un quadrilatère articulé, où une bielle (4) est reliée au moyen d'articulations par l'intermédiaire d'un premier organe de liaison (2) et d'un deuxième organe de liaison (3) à l'organe de base (1) et la fixation (6) est fixée au niveau de la bielle (4) du quadrilatère articulé,
- deux quadrilatères articulés sont disposés de manière parallèle et de manière espacée l'un par rapport à l'autre et sont réalisés de manière identique, et
- les deux quadrilatères articulés sont couplés par l'intermédiaire d'un élément de liaison et la fixation (6) est fixée au niveau de l'élément de liaison.

2. Ensemble selon la revendication 1, **caractérisé en ce que** les deux ensembles à quatre articulations sont couplés à des barres de liaison (5).

3. Ensemble selon la revendication 1 ou 2, **caractérisé en ce qu'**est disposé au niveau de la liaison un composant, au niveau duquel une possibilité de fixation pour la fixation (6) est disposée.
